# EUROPEAN PATENT APPLICATION

(11) **EP 1 460 046 A1**
(43) Date of publication of application: **22.09.2004**
(21) Application number: 02783691.5
(22) Date of filing: 29.11.2002
(51) Int. Cl.: C03C 17/02

(54) **GLASS SUBSTRATE WITH COLORED FILM, PARTICLE-CONTAINING SOLUTION FOR FORMING COLORED FILM AND METHOD FOR PRODUCING GLASS SUBSTRATE WITH COLORED FILM**

(30) Priority: 30.11.2001 JP 2001367595; 21.05.2002 JP 2002145987; 21.05.2002 JP 2002145988
(71) Applicant: Nippon Sheet Glass Company, Limited, Osaka-shi, Osaka 541-8559 (JP)
(72) Inventor: INOGUCHI, Kazuyuki NIPPON SHEET GLASS CO., LTD., Osaka-shi, Osaka 541-8559 (JP); KAMITANI, Kazutaka NIPPON SHEET GLASS CO., LTD., Osaka-shi, Osaka 541-8559 (JP); TSUJINO, Toshifumi NIPPON SHEET GLASS CO., LTD., Osaka-shi, Osaka 541-8559 (JP)
(74) Representative: Intès, Didier Gérard André
(86) International application number: PCT/JP2002/012483
(87) International publication number: WO 2003/045866

(57) **Abstract**

The present invention provides a glass substrate with a colored film that includes a glass substrate (1) and a colored film (2) that coats at least part of the surface thereof. This colored film (2) includes an alkali metal oxide, a silicon oxide, and fine particles containing carbon as their main component.

## Description

### TECHNICAL FIELD

The present invention relates to a glass substrate with a colored film, a liquid composition for forming a colored film, and a method for producing a glass substrate with a colored film. Particularly, the present invention relates to a glass substrate with a colored film that can be recycled as cullets to be used in a raw material for glass. The liquid composition for forming a colored film according to the present invention is suitable for forming a ceramic color to be disposed in a peripheral part of a window glass for automobiles.

### BACKGROUND ART

In the field of glass for automobiles, as a glass sheet to be attached to a car body with, for example, an adhesive, a glass sheet with a colored film is used in which its peripheral part is coated with a ceramic color in order to prevent the adhesive from deteriorating due to ultraviolet rays of sunlight and to provide it with a fine appearance.

The ceramic color contains about 20 mass% of pigment that includes ions of transition metal such as, for instance, Cr, Fe, Co, Ni, or Cu as its base. In a conventional clear float glass, the amount of transition metal is less than 1%. Even a slight amount, for example, tens of ppm, of the transition metal affects its color tone and makes it perceivable that the transition metal is contained therein. It therefore is impossible at present to recycle the part coated with the ceramic color by remelting it. This part may be used as a recycled material indirectly for other materials such as, for instance, roadbed materials or has to be disposed as waste.

Conventionally, there were some glasses with a ceramic color containing lead. Recently, however, the use of lead has been limited for the purpose of environmental protection.

New ceramic colors that are free from lead have been proposed and include, for instance, P₂O₅-based and alkali metal oxide-ZnO-B₂O₃-SiO₂-based ceramic colors.

The P₂O₅-based compositions are glass compositions and frit compositions disclosed in JP7(1995)-69672A, JP8(1996)-183632A, and JP9(1997)-208259A.

Furthermore, the alkali metal oxide-ZnO-B₂O₃-SiO₂-based composition is a ceramic color composition disclosed in JP8(1996)-133784A.

The respective compositions mentioned above, however, have problems such as low acid resistance, a big difference in coefficient of expansion, etc. The aforementioned P₂O₅-based composition is composed of P₂O₅, an alkali metal oxide, an alkaline earth oxide, etc. Hence, the temperature dependency of its coefficient of expansion is higher than that of a float glass having a soda-lime silica composition that often is used as a substrate. Such a difference in coefficient of expansion causes a strain in heating and cooling a glass substrate and degrades the strength of a colored film and glass.

Moreover, the above-mentioned alkali metal oxide-ZnO-B₂O₃-SiO₂-based composition contains 10% to 20% of B₂O₃ and 35% to 45% of ZnO and thereby has lower acid resistance.

Glasses coated with these ceramic colors are free from lead but contain components that essentially are not contained in a float glass as described above. Consequently, it is impossible to use them as a cullet raw material to be used for a float glass having a soda-lime silica composition.

### DISCLOSURE OF THE INVENTION

With the above in mind, the present invention is intended to provide a glass substrate with a colored film that can be recycled as a cullet raw material, a fine-particle-containing solution for forming a colored film, and a method for producing a glass substrate with a colored film.

As a result of keen studies made assiduously, in the present invention, a colored film that coats at least a part of a surface of a glass substrate is formed with fine particles containing carbon as their main component dispersed in a film containing a silicon oxide and an alkali metal oxide.

In the present specification, the "main component" denotes a component that accounts for at least 50 mass% of the whole.

This colored film can be formed as one having a light-shielding function through the use of the fine particles containing carbon as their main component even when it is substantially free from transition metal such as Cr, Fe, Co, Ni, or Cu that serves as a colorant.

In this connection, the expression "substantially free" denotes that the amount of transition metal contained therein as an impurity is allowable and specifically, is in the range of about 1 mass% or less, preferably in the range of 100 ppm or less.

When the glass substrate with the colored film is used as cullets to be a part of a raw material for glass, the fine particles containing carbon as their main component that serves as a colorant react with oxygen in melting the raw material to become carbon dioxide and volatilize. Hence, the molten glass is not colored. Consequently, the glass substrate with the colored film readily can be recycled as cullets.

### BRIEF DESCRIPTION OF DRAWINGS

FIG. 1 is a cross-sectional partial view showing an example of a glass sheet with a colored film of the present invention.
FIG. 2 is a cross-sectional view showing an example of a glass sheet with a colored film of the present invention.
FIG. 3 is a cross-sectional view showing an example of a laminated glass including a glass sheet with a colored film of the present invention.
FIG. 4 is a plan view showing an example of a laminated glass including a glass sheet with a colored film of the present invention.

### BEST MODE FOR CARRYING OUT THE INVENTION

In the present invention, the colored film is formed to be an amorphous film (a vitreous film) and thereby the oxygen-shielding function of the colored film is secured. This can prevent the fine particles containing carbon as their main component from being oxidized even if the glass substrate is heated to a high temperature in forming the colored film. In order to allow the colored film to be vitreous, it may contain an alkali metal oxide and a silicon oxide.

Preferably, the colored film contains, in terms of mass%:
8% to 23% of alkali metal oxide;
40% to 75% of silicon oxide; and
3% to 45% of fine particles,
   and more preferably,
10% to 23% of alkali metal oxide;
49% to 73% of silicon oxide; and
16% to 40% of fine particles.

The colored film may contain one type of alkali metal oxide but preferably, it contains at least two types of alkali metal oxides. The use of at least two types of alkali metal oxides makes it possible to obtain a hard colored film that is excellent in moisture resistance and chemical resistance (acid resistance and alkali resistance).

The phenomenon that generally is referred to as a "mixed alkali effect" is one that when a part of alkali is substituted by another alkali element, its characteristics deviate from the sum rule considerably even when the total content of alkali is not changed. Examples of characteristics that are changed considerably by the mixed alkali effect include chemical resistance that is typified by water resistance, acid resistance, and alkali resistance, electrical conductivity, and a diffusion coefficient.

The mixed alkali effect in an amorphous and vitreous colored film lowers the mobility of alkali, suppresses alkaline elution, and thereby can improve the moisture resistance.

The following description is directed to a preferred embodiment of the colored film and reasons for limiting its components. The contents of components described below are indicated in mass%.

When the alkali metal oxide includes only one type of alkali metal, it is advantageous that this alkali metal is sodium.

With respect to Na₂O, it is not preferable that its content is less than 1%, because less than 1% of Na₂O results in deterioration in alkali resistance of the colored film and an excessively low coefficient of thermal expansion that in turn degrades the strength of the glass and colored film. A preferred content of Na₂O is at least 5%. On the other hand, it also is not preferable that the content of Na₂O exceeds 18%, because more than 18% of Na₂O results in an excessively high coefficient of thermal expansion that causes a large shrinkage of the film when it is dried or sintered and thereby cracks tend to occur in the colored film. A further preferred content of Na₂O is 15% or less.

When at least two types of alkali metal oxides are included, it is advantageous that the at least two types of alkali metal oxides include, together with sodium, at least one selected from potassium and lithium.

K₂O and/or Li₂O improves the moisture resistance and chemical resistance of the colored film when being contained together with Na₂O. When the total content of K₂O and Li₂O is less than 0.1%, the water resistance and the moisture resistance cannot be improved satisfactorily. Accordingly, the total content is preferably at least 1%. The total content of K₂O and Li₂O exceeding 19% results in an excessively high coefficient of thermal expansion that causes a large shrinkage of the film when it is dried or sintered, as in the case of Na₂O. This results in cracks tending to occur in the colored film. The total content of K₂O and Li₂O is preferably 12% or less.

The content of K₂O is preferably 18% or less, more preferably 11% or less, while the content of Li₂O is preferably 10% or less, more preferably 5% or less.

The silicon oxide is, for example, SiO₂, and SiO₂ serves as a network former in a vitreous film. A content of SiO₂ of less than 40% results in degradation in the strength of the colored film and also causes the alkali resistance to deteriorate. Hence, the content of SiO₂ is preferably at least 40%, more preferably at least 50%.

On the other hand, a content of SiO₂ exceeding 70% results in a lower coefficient of thermal expansion. This results in a greater difference in coefficient of thermal expansion with that of a glass having a soda-lime silica composition. Furthermore, unlike the glass, the colored film is subjected to not only the shrinkage caused by the thermal expansion but also that caused by moisture loss. The shrinkage caused by the moisture loss is suppressed by the presence of alkali and the shrinkage caused by the thermal expansion therefore dominates. Hence, it is preferable that the content of SiO₂ is 70% or less.

The fine particles containing carbon as their main component affect the film strength as well as alkali resistance depending on their ratio to the silicon oxide and alkali metal oxide. Hence, it is preferable that the content of the fine particles to be added to serve as a colorant is specifically in the range of 15% to 40%, more preferably in the range of 15% to 35%.

With consideration given to the above, it is preferable that the colored film contains, in terms of mass%:
1% to 18% of Na₂O;
0% to 18% of K₂O;
0% to 10% of Li₂O;
0.1% to 19% of K₂O + Li₂O;
40% to 70% of SiO₂; and
15% to 40% of fine particles,
   and more preferably,
5% to 15% of Na₂O;
0% to 11% of K₂O;
0% to 5% of Li₂O;
1% to 12% of K₂O + Li₂O;
50% to 70% of SiO₂; and
15% to 35% of fine particles.

Examples of the fine particles containing carbon as their main component include carbon black, black lead (graphite) composed of carbon alone, azo pigment, phthalocyanine pigment, and fused polycyclic pigment, and a preferable form thereof is the form of fine particles. Carbon black fine particles are further preferable. Various carbon blacks are manufactured that have different characteristics depending on the manufacturing methods to be employed. Any of the carbon blacks may be used. Examples of carbon blacks manufactured by different methods include acetylene black, channel black, furnace black, and Ketjenblack (the trade name of a product of Lion Corporation). The diameter of the fine particles is not particularly limited.

The carbon black reacts with oxygen to become carbon dioxide and volatilizes not only at 1000°C or higher but also at a temperature close thereto. Usually, a float glass is manufactured by heating a raw material to at least 1000°C to melt it and then forming it into a float glass. Hence, in this melting process, the carbon black volatilizes and thus does not affect the coloration of the glass. Accordingly, when consideration is given to the recyclability, carbon black is a preferable colorant. Furthermore, since the carbon black provides a black appearance, it also is suitable as a ceramic color of glasses for automobiles.

It is preferable that the colored film is substantially free from transition metal to be used as a colorant. According to the present invention, it is possible to obtain a colored film that is colored satisfactorily without containing transition metals and compounds thereof.

Examples of transition metals that play a part in the coloration of glass include Ti, V, Cr, Mn, Fe, Co, Ni, Cu, and Mo. When a glass substrate with a colored film containing a few % of an oxide thereof, for example, CoO, Cr₂O₃, CuO, NiO, or MnO, is included, as recycled cullets, in a raw material for a clear glass or glass containing a different coloring component from that of the colored film, it may prevent desired optical characteristics (transparency, coloration, etc.) from being obtained.

Cadmium sulfide or antimony sulfide may form colloids in glass to color the glass in some cases. Accordingly, it is preferable that the colored film is substantially free from these elements and compounds thereof.

With consideration given to the effect on the environment, it is preferable that the colored film is substantially free from lead.

From the viewpoints mentioned above, preferably, the colored film is substantially free from Ti, Zn, Zr, P, La, Co, Cr, Cu, Ni, Mn, Cd, Sb, and Pb.

The colored film according to the present invention contains an alkali metal oxide and fine particles and therefore shrinks less during its formation than a film formed of a silicon oxide alone. Accordingly, the stress caused between the colored film and the substrate can be eased.

For example, when a thick vitreous film is to be formed directly by a sol-gel process, cracks occur due to the stress caused between itself and the substrate. Hence, in order to obtain a thick film, a plurality of thin films that each cause less stress have to be formed to be stacked together.

On the contrary, application of the present invention makes it possible to obtain a film having a desired thickness, for instance, a colored film with a thickness of 1 to 20 µm, through film formation carried out only once.

The glass substrate with a colored film thus obtained is suitable as a cullet raw material for a general soda-lime silica glass, particularly as a cullet raw material for a float glass. Furthermore, the glass substrate with a colored film is excellent in moisture resistance and light-shielding function and further can be provided with high hardness and high resistance to acid and alkali. Accordingly, the glass substrate with a colored film can preferably be used particularly for window glasses for automobiles.

The fine-particle-containing solution for forming a colored film according to the present invention (hereinafter, referred to as a "liquid composition") includes at least an alkali metal silicate and fine particles containing carbon as their main component, and preferably, further includes a silicon-containing compound, for example, a silicon oxide or a silicon alkoxide (for instance, a silicon alkoxide containing an amino group).

The alkali metal silicate is used as a raw material of an alkali silicon oxide and an silicon oxide that are contained in a colored-film formed from the liquid composition. Preferably, the alkali metal silicate is contained in the liquid composition in the form of water glass. In order to increase the ratio of the silicon oxide relatively in the film, a silicon oxide may be added to the liquid composition.

In order to obtain the mixed alkali effect, it is preferable that the alkali metal silicate includes at least two types of alkali metal silicates. It is advantageous that the at least two types of alkali metal silicates include sodium and at least one selected from potassium and lithium.

It is preferable that when the alkali metal silicates are expressed in terms of an alkali metal oxide and a silicon oxide, a solid content of the liquid composition include, in terms of mass%, for example:
8% to 23% of alkali metal oxide;
40% to 75% of silicon oxide; and
3% to 45% of fine particles,
   and more preferably,
10% to 23% of alkali metal oxide;
49% to 73% of silicon oxide; and
16% to 40% of fine particles.

In this connection, the concept of the "solid content" is used in the field of, for example, the sol-gel process and the "solid content" denotes components contained in a solid body such as a film formed from a liquid composition. The "solid content" also includes components that have been dissolved in the liquid composition besides the fine particles.

A small content of alkali metal silicates and silicon oxide results in both degradation in strength of the colored film formed from the liquid composition and deterioration in alkali resistance. On the other hand, an excessively large content of such components results in a relative decrease in content of fine particles that serves as a colorant, which in turn may prevent the colored film from having desirable coloration. The increase in ratio of an silicon oxide to alkali metal silicates results in the increase in shrinkage of the film caused by drying and sintering. As a result, cracks tend to occur in the colored film. When consideration is given to these, it is preferable that the alkali metal silicates, a silicon oxide, and fine particles are contained in the liquid composition at the above-mentioned ratios.

The following is a further preferable ratios of components included in the solid content of the liquid composition.

It is preferable that when the alkali metal silicates are expressed in terms of an alkali metal oxide (R₂O; R denotes an alkali metal element) and a silicon oxide (SiO₂), the solid content of the liquid composition includes, in terms of mass%:
1% to 18% of Na₂O;
0.1% to 19% of K₂O + Li₂O;
40% to 70% of SiO₂; and
15% to 40% of fine particles.

When sintering is carried out in an oxidizing atmosphere, fine particles present in the vicinity of the film surface may disappear. In this case, the ratio of the fine particles contained in the film becomes lower than that of the fine particles contained in the liquid composition. Therefore it is advantageous that in expectation of this, the fine particles are contained in the liquid composition at a slightly higher ratio.

Preferably, the liquid composition of the present invention further contains a surfactant. This surfactant may be added to the liquid composition together with a silicon oxide, for instance, colloidal silica. A colloidal silica solution containing a surfactant has an effect of improving dispersibility and therefore provides an effect of inhibiting phase separation from occurring in the liquid composition.

It is preferable that the liquid composition contains a solvent, preferably water, in an amount that is required for dispersing respective components uniformly in applying it to the surface of a glass substrate. When the components of the liquid composition for forming a colored film are supplied in the solid state, it is advantageous to add water. In the light of environmental protection, preferably, the liquid composition is substantially free from organic solvents.

According to another aspect of the present invention, there is provided a method for manufacturing a glass substrate with a colored film. The method includes: applying a fine-particle-containing solution according to the present invention to at least a part of a surface of a glass substrate; and forming a colored film from the fine-particle-containing solution by heating the glass substrate with the fine-particle-containing solution applied thereto.

In the step of heating the glass substrate, while being heated to 500°C to 730°C, the glass substrate may be subjected to at least one process selected from a tempering process and a bending process.

The method of applying the liquid composition is not particularly limited but may be, for instance, a dip coating method, a flow coating method, a curtain coating method, a spin coating method, a spray coating method, a bar coating method, a roll coating method, a brush coating method, a screen printing method, or an ink jet printing method.

It is advantageous that a pre-drying step is carried out after the application step but before the sintering step. The pre-drying can prevent bubbling from occurring in the colored film and in turn cracks from being caused due to the bubbling. It is advantageous to carry out this pre-drying at room temperature to 250°C for not longer than 24 hours as required.

The drying carried out in the air atmosphere at a temperature of 250°C or higher is not preferable since the fine particles containing carbon as their main component may be burnt in some cases. In the case of the drying performed at room temperature alone, it has to be carried out for many hours. In this case, if the atmosphere has a high humidity, the colored film tends to adsorb water. Accordingly, short time drying is preferable.

When the surfactant is contained in the colored film, the uniformity in dispersion of the fine particles is maintained. Consequently, the phase separation that is caused by the drying carried out for many hours tends not to occur in the colored film. Furthermore, the fine particles can be prevented from burning.

In order to prevent the colored film from having a surface with irregularity and to obtain the smoothness of the composition applied to the glass substrate, it is preferable that the drying step includes a first drying step that is carried out at room temperature and a second drying step that is carried out while heating is conducted.

With respect to the sintering step, it is advantageous to carry out the sintering at a temperature of 730°C or lower since a temperature exceeding 730°C causes remarkable deformation of the glass substrate. The sintering temperature may be set at 500°C or higher and thereby the glass substrate may be subjected to a bending process, a tempering process, etc. at the same time.

In order to improve the strength of the film while preventing the fine particles from burning, preferably, the sintering is carried out at 500°C or higher for about 80 seconds to 20 minutes or at 600°C or higher for about 80 seconds to 10 minutes. In this connection, when the glass substrate is not subjected to the bending process, the tempering process, etc., a glass substrate with a colored film may be produced through sintering that is carried out at a temperature lower than 500°C or drying alone.

In the case where it is necessary to improve the water resistance and moisture resistance of the colored film further, the colored film may be subjected to dealkalization after its formation. That is, it is preferable that the manufacturing method of the present invention further includes reducing an alkali metal oxide contained in the colored film by bringing at least a polar solvent into contact with the colored film. The alkali metal oxide is a component that is essential in forming the colored film to be amorphous to secure its oxygen-shielding function. Hence, for example, a colored film is allowed to contain plenty of alkali metal oxide (preferably at least 8 mass%) when being sintered in the heating step and thereby is formed as an amorphous film that is excellent in the oxygen-shielding function, and thereafter, the alkali metal oxide is reduced (preferably to 5 mass% or less). This eases the oxidation of the fine particles containing carbon as their main component and prevents the colored film from deteriorating.

The polar solvent is not particularly limited. However, it is advantageous that the polar solvent contains, for example, at least one selected from water and alcohol with a carbon number of three or smaller, preferably water. The polar solvent may contain acid. Particularly, an aqueous solution containing acid is suitable for the reduction of the alkali metal oxide. The water is not particularly limited and may be, for instance, tap water, distilled water, or ion exchanged water.

The acid is not particularly limited. As the acid may be used various acids defined in, for instance, Arrhenius, Brønsted-Lowry, Lewis, Cady & Elsey. The acid may be organic acid but at least one inorganic acid selected from hydrochloric acid, sulfuric acid, nitric acid, hydrofluoric acid, and phosphoric acid is suitable.

When acid is used, it is preferable that a step of reducing the acid contained in the colored film, i.e. a neutralization step is carried out by bringing at least a polar solvent into contact with the colored film additionally after a polar solvent containing acid is brought into contact therewith.

As the solvent to be used for the neutralization may be employed, for instance, water as in the above or a basic solution containing a hydroxyl-containing compound such as, for example, NaOH, Ca(OH)₂, or Al(OH)₃.

The method of bringing a solvent into contact with the colored film is not particularly limited but may be immersion into a solvent (solution) or application with, for instance, cloth containing a solvent (solution).

It is preferable that after the dealkalization, the colored film contains 5 mass% of alkali metal oxide or less, and further specifically, in terms of mass%:
0.1% to 5% of alkali metal oxide;
55 % to 90% of silicon oxide; and
10% to 45% of fine particles.

It is preferable that the content of alkali metal oxide is as small as possible but the alkali metal oxide has no substantial influence as long as its content is 5 mass% or less.

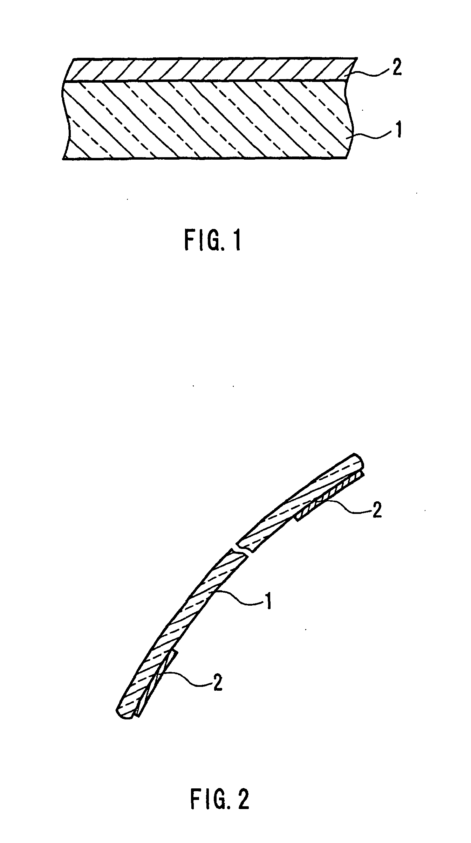

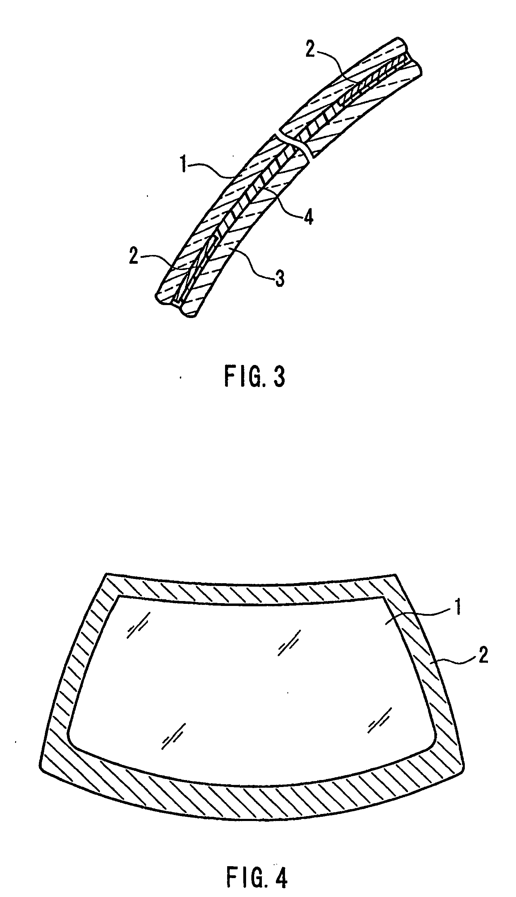

In the glass sheet with a colored film of the present invention, as shown in FIG. 1, a colored film 2 is formed on a glass substrate 1. As shown in FIG. 2, a glass substrate 1 may be bent. In this glass substrate 1, a colored film 2 is formed on its peripheral part. As shown in FIG. 3, a laminated glass may be formed in which a glass substrate 1 (a first glass substrate) with a colored film 2 formed thereon and another glass substrate (a second glass substrate) 3 are joined together with a thermoplastic resin film 4 such as polyvinyl butyral (PVB). As shown in FIG. 4, this laminated glass can be used as a windshield with the colored film 2 arranged in the form of a frame.

### EXAMPLES

In the following, the unit "%" that is used in indicating component ratios denotes "mass%".

### Example 1

23 g of sodium silicate solution (Water Glass No. 3, manufactured by KISHIDA CHEMICAL CO., LTD.), 8 g of potassium silicate solution (SNOWTEX K, manufactured by NISSAN CHEMICAL INDUSTRIES, LTD.), 29 g of colloidal silica (PC500, manufactured by NISSAN CHEMICAL INDUSTRIES, LTD.), and 40 g of carbon black (LION PASTE W-311N, manufactured by Lion Corporation) were weighed and then were mixed together. Thus, a liquid composition for forming a colored film was obtained. Table 1 shows composition ratios of the solid content included in the liquid composition.

This liquid composition was applied, with a bar coater, to the surface of a washed glass substrate (150 × 150 × 2.1 mm) having a soda-lime silicate glass composition. This was dried at room temperature for five minutes and then in a drying furnace at 190°C for 10 minutes. Thereafter, this glass substrate was put into a sintering furnace whose temperature had been raised to 720°C and thereby the colored film applied thereto was sintered for 90 seconds. The colored film thus obtained had a thickness of about 7 µm. Table 1 shows the composition of the colored film and the conditions under which the colored film was formed.

The visible light transmittance and ultraviolet transmittance of the glass sheet with the colored film thus obtained were measured with a spectrophotometer (UVPC-3100, manufactured by Shimadzu Corporation). As a result, the respective transmittances each were 0.1% or lower with respect to the entire wavelength region corresponding to visible light to ultraviolet light. Thus, it was proved that in spite of the sintering step carried out at 720°C, carbon black serving as a colorant was not oxidized and thereby the colored film exhibited its light-shielding function (see Table 1).

In order to examine the acid resistance and alkali (base) resistance of the colored film according to the present invention, the following test was carried out. That is, with a spectro-photometric type colorimeter (SE-2000, manufactured by Nippon Denshoku Industries Co., Ltd.) variations in lightness of the glass surface and the film surface caused when the glass sheet with the colored film was immersed in 0.1N sulfuric acid (an acid resistance test) and 0.1N sodium hydroxide (an alkali resistance test) solutions for 24 hours were determined.

As a result of the acid resistance test and alkali resistance test, it was proved that the lightness of both the colored film surface and the exposed glass surface did not vary. That is, it was proved that the colored film had an excellent resistance to acid and alkali.

The evaluation of hardness of the colored film was carried out using a Taber abrasion tester (5150 ABRASER, TABER INDUSTRIES) by rotating an abrasion ring against the glass sheet with the colored film 1000 times at a load of 500 g and determining the variations in transmittance caused between before and after the test. As a result, in the colored film according to the present invention, the transmittances obtained before and after the test did not vary with each other. Thus, it was proved that the colored film had considerably high hardness and excellent abrasion resistance (see Table 1).

Furthermore, in order to examine the influence that is caused when the liquid composition for forming a colored film according to the present invention is remelted as a cullet raw material in manufacturing glass, a high-temperature melting test was carried out. In the test, the liquid composition was heated up to 1300°C at a heating rate of 10°C/min using a TG-DTA analyzer (thermal analysis equipment TAS-100, manufactured by Rigaku Corporation).

The liquid composition thus melted was observed visually. Consequently, it was confirmed that the carbon serving as a colorant had been burnt to disappear and thereby the liquid composition was transparent. As a result, it was proved that the colored film of the present invention had no influence on the coloration of the glass even if it was contained in the cullet raw material used in manufacturing the glass.

Moreover, in order to check the moisture resistance, variations in lightness of the glass surface and the film surface caused after the glass sheet with the colored film was maintained, for 400 hours, inside a temperature and humidity tester (JLH-300, manufactured by ETAC Engineering Co.) that was kept at 50°C and a RH of 95% were determined with a spectro-photometric type colorimeter (SE-2000, manufactured by Nippon Denshoku Industries Co., Ltd.), and the film condition was observed visually. As a result, no variations in lightness were found in both the glass surface and the film surface, and peeling of the colored film did not occur.

### Example 2

10 g of sodium silicate solution, 17 g of potassium silicate, 33 g of colloidal silica, and 40 g of carbon black were weighed and then were mixed together. Thus, a dispersion was obtained. This dispersion was applied, with a spin coater, to the surface of a washed glass substrate having a soda-lime silicate glass composition. This was dried at room temperature for five minutes and then in the drying furnace at 190°C for 30 minutes. Thereafter, this was sintered in the sintering furnace whose temperature had been raised to 720°C, for 120 seconds. The colored film thus obtained had a thickness of about 5 µm (see Table 1).

### Example 3

23 g of sodium silicate solution, 8 g of potassium silicate, 29 g of colloidal silica, and 40 g of carbon black (LION PASTE W-310A, manufactured by Lion Corporation) were weighed and then were mixed together. Thus, a dispersion was obtained. This dispersion was applied, with a bar coater, to the surface of a washed glass substrate having a soda-lime silicate glass composition. This was dried at room temperature for five minutes and then in the drying furnace at 190°C for 10 minutes. Thereafter, this was sintered in the sintering furnace whose temperature had been raised to 620°C, for 600 seconds. The colored film thus obtained had a thickness of about 4 µm (see Table 1).

### Example 4

29 g of sodium silicate solution, 7 g of lithium silicate (LSS35, manufactured by NISSAN CHEMICAL INDUSTRIES, LTD.), 24 g of colloidal silica, and 40 g of carbon black (LION PASTE W-311N, manufactured by Lion Corporation) were weighed and then were mixed together. Thus, a dispersion was obtained. This dispersion was applied, with a bar coater, to the surface of a washed glass substrate having a soda-lime silicate glass composition. This was dried at room temperature for 10 minutes and then in the drying furnace at 190°C for 15 minutes. Thereafter, this was sintered in the sintering furnace whose temperature had been raised to 720°C, for 90 seconds. The colored film thus obtained had a thickness of about 8 µm (see Table 1).

The visible light transmittance and ultraviolet transmittance of the respective glass sheets with a colored film obtained in Examples 2 to 4 each were 0.1% or lower with respect to the entire wavelength region concerned. Thus, it was proved that the colored film had a light-shielding function. In addition, various tests were carried out as in Example 1. As a result, excellent characteristics were confirmed as in the glass sheet with a colored film obtained in Example 1.

**Table 1-1**

| Examples | 1 | 2 | 3 | 4 | 5 | 6 | 7 |
|---|---|---|---|---|---|---|---|
| Film Composition | | | | | | | |
| Na₂O (%) | 11 | 7 | 14 | 15 | 11 | 6 | 8 |
| K₂O (%) | 4 | 10 | 5 | - | 5 | 14 | 6 |
| Li₂O (%) | - | - | - | 2 | - | - | 2 |
| SiO₂ (%) | 60 | 54 | 63 | 65 | 54 | 60 | 63 |
| C (%) | 25 | 29 | 18 | 18 | 30 | 20 | 21 |

| Film Characteristics | | | | | | | |
|---|---|---|---|---|---|---|---|
| Film Thickness (µm) | 7 | 5 | 4 | 8 | 10 | 12 | 10 |
| Ultraviolet and Visible-Light Transmittance (%) | <0.1 | <0.1 | <0.1 | <0.1 | <0.1 | <0.1 | <0.1 |
| Acid and Base Resistance | Good | Good | Good | Good | Good | Good | Good |
| Abrasion Resistance | Good | Good | Good | Good | Good | Good | Good |
| High-Temperature Melting Test | Good | Good | Good | Good | Good | Good | Good |
| Moisture Resistance | Good | Good | Good | Good | Good | Good | Good |
| *1 With respect to the acid and base resistance and moisture resistance, "Good" indicates a variation in lightness ΔL of 1 or less. | | | | | | | |
| *2 With respect to the abrasion resistance, "Good" indicates a variation in visible light transmittance of 1% or less. | | | | | | | |
| *3 In the high-temperature melting test, "Good" indicates no coloring observed visually. | | | | | | | |

**Table 1-2**

| Examples | 1 | 2 | 3 | 4 | 5 | 6 | 7 |
|---|---|---|---|---|---|---|---|
| Ratios of Solid Content included in Liquid Composition | | | | | | | |
| Na₂O (%) | 10 | 5 | 10 | 12 | 9 | 3 | 6 |
| K₂O (%) | 3 | 8 | 3 | - | 3 | 12 | 4 |
| Li₂O (%) | - | - | - | 1 | - | - | 1 |
| SiO₂ (%) | 57 | 51 | 56 | 60 | 49 | 56 | 59 |
| C (%) | 30 | 36 | 31 | 27 | 39 | 29 | 30 |

| Film Formation Method | | | | | | | |
|---|---|---|---|---|---|---|---|
| Application Method | B | S | B | S | B | B | S |
| First-Drying Temperature (°C) | Room Temperature | Room Temperature | Room Temperature | Room Temperature | Room Temperature | Room Temperature | Room Temperature |
| First-Drying Time (min) | 5 | 5 | 5 | 10 | 20 | 20 | 5 |
| Second-Drying Temperature (°C) | 190 | 190 | 190 | 190 | 190 | 190 | 230 |
| Second-Drying Time (min) | 10 | 30 | 10 | 15 | 20 | 20 | 10 |
| Sintering Temperature (°C) | 720 | 720 | 620 | 720 | 720 | 720 | 720 |
| Sintering Time (sec) | 90 | 120 | 600 | 90 | 100 | 80 | 90 |
| *B = Bar Coating, S = Spin Coating | | | | | | | |

### Examples 5 to 7

Glass sheets provided with colored films having various film compositions indicated in Table 1, respectively, were produced in the same manner as in the example described above, and their characteristics were evaluated in the same manner as in the above. The results also are shown in Table 1.

As shown in Table 1, the glass sheets with a colored film obtained in the respective examples had a spectral transmittance, in the visible light and ultraviolet light regions, of 0.1% or lower with respect to the entire wavelength region concerned. Thus, they had a sufficiently high light-shielding function.

These colored films also exhibited excellent characteristics in the tests of chemical resistance to acid and alkali, abrasion resistance, and moisture resistance. Moreover, the liquid compositions that had been melted were transparent. Hence, they can be recycled as a cullet raw material to be used in manufacturing glass.

### Comparative Examples 1 and 2

As comparative examples, glass sheets with a colored film (Comparative Examples 1 and 2) were produced in the same manner as in Example 1 except that the alkali metal silicates were not used. Their compositions and production conditions are indicated in Table 2.

**Table 2**

| | Comparative Example 1 | Comparative Example 2 |
|---|---|---|
| Ratios of Solid Content included in Liquid Composition | | |
| Na₂O (%) | - | - |
| SiO₂ (%) | 83 | 74 |
| C (%) | 17 | 26 |

| Conditions under which films were formed | | |
|---|---|---|
| Application Method | B | B |
| First-Drying Temperature (°C) | Room Temperature | Room Temperature |
| First-Drying Time (min) | 5 | 5 |
| First-Drying Temperature (°C) | 190 | 190 |
| Second-Drying Time (min) | 30 | 30 |
| Sintering Temperature (°C) | 720 | 720 |
| Sintering Time (sec) | 90 | 90 |

| Film Characteristics | | |
|---|---|---|
| Abrasion Resistance | Poor | Poor |
| *B = Bar Coating, S = Spin Coating | | |

In both Comparative Examples 1 and 2, countless cracks occurred in the colored films after sintering and thereby no glass sheets with a colored film were completed. In addition, in Comparative Example 3, the moisture resistance was poor and the film was peeled off when the moisture resistance test was carried out.

### Examples 8 to 10

In Examples 8 to 10, laminated glasses were produced. Glass sheets with a colored film were produced under the conditions indicated in Table 3. Each of them and a glass sheet with no colored film formed thereon were joined together with polyvinyl butyral. Thus, laminated glasses were obtained.

**Table 3-1**

| Examples | 8 | 9 | 10 |
|---|---|---|---|
| Film Composition | | | |
| Na₂O (%) | 11 | 7 | 15 |
| K₂O (%) | 4 | 10 | - |
| Li₂O (%) | - | - | 2 |
| SiO₂ (%) | 60 | 54 | 65 |
| C (%) | 25 | 29 | 18 |

| Film Characteristics | | | |
|---|---|---|---|
| Film Thickness (µm) | 10 | 9 | 10 |
| Ultraviolet and Visible-Light Transmittance (%) | <0.1 | <0.1 | <0.1 |
| Moisture Resistance | Good | Good | Good |
| Efflorescence Resistance | Good | Good | Good |

**Table 3-2**

| Examples | 8 | 9 | 10 |
|---|---|---|---|
| Ratios of Solid Content included in Liquid Composition | | | |
| Na₂O (%) | 10 | 5 | 12 |
| K₂O (%) | 3 | 8 | - |
| Li₂O (%) | - | - | 1 |
| SiO₂ (%) | 57 | 51 | 60 |
| C (%) | 30 | 36 | 27 |

| Film Formation Method | | | |
|---|---|---|---|
| Application Method | B | S | B |

| First-Drying Temperature (°C) | Room Temperature | Room Temperature | Room Temperature |
|---|---|---|---|
| First-Drying Time (min) | 5 | 5 | 10 |
| Second-Drying Temperature (°C) | 190 | 190 | 190 |
| Second-Drying Time (min) | 10 | 30 | 15 |
| Sintering Temperature (°C) | 620 | 620 | 620 |
| Sintering Time (sec) | 600 | 600 | 600 |
| *B = Bar Coating, S = Spin Coating | | | |

With respect to the laminated glasses obtained in Examples 8 to 10, their moisture resistance was measured as in Example 1 and excellent results were obtained.

In addition, the occurrence of efflorescence was determined. The "efflorescence" is a phenomenon that alkali-containing ions selectively elute and react with halogenide or carbon dioxide present in the air to produce white crystals. This was checked by an exposure test carried out inside for 400 hours. As a result, no variations in color tone of the colored films of the respective laminated glasses were observed and crystallization also was not found.

### Example 11

23 g of sodium silicate solution (Water Glass No.3, manufactured by KISHIDA CHEMICAL CO., LTD., hereinafter also referred to as "water glass"), 8 g of potassium silicate solution (SNOWTEX K, manufactured by NISSAN CHEMICAL INDUSTRIES, LTD.), 29 g of colloidal silica (PC500, manufactured by NISSAN CHEMICAL INDUSTRIES, LTD.), and 40 g of carbon black (LION PASTE W-311N, manufactured by Lion Corporation) were weighed and then were mixed together. Thus, a liquid composition for forming a colored film was obtained.

This liquid composition was applied, with a bar coater, to the surface of a washed glass substrate (150 × 150 × 2.1 mm) having a soda-lime silicate glass composition. This was dried at room temperature for five minutes and then in the drying furnace at 190°C for 10 minutes. Thereafter, this was sintered in the sintering furnace whose temperature had been raised to 720°C, for 90 seconds.

Further, this was immersed in 0.1N H₂SO₄ for 30 minutes to be subjected to dealkalization. Subsequently, acid remaining on the surface was washed off with water and superfluous water was wiped off with cloth. The colored film thus obtained had a thickness of about 10 µm. Table 4 shows the compositions of the colored film checked before and after the dealkalization and conditions under which the film was formed.

With respect to the liquid composition for forming a colored film, its various characteristics were evaluated in the same manner as in Example 1.

Furthermore, in order to examine the influence caused when it was remelted as a cullet raw material in manufacturing glass, a high-temperature melting test was carried out. In the test, the liquid composition was heated up to 1300°C at a heating rate of 10°C/min using a TG-DTA analyzer (thermal analysis equipment TAS-100, manufactured by Rigaku Corporation). The composition thus melted was observed visually and it was confirmed that the carbon serving as a colorant had been burnt to disappear and thereby the liquid composition was transparent.

Moreover, in order to examine efflorescence resistance, the liquid composition was kept inside a room for one month and then the film conditions were observed visually. As a result, no efflorescence occurred and no variations in the colored film were observed.

### Examples 12 to 14

Glass sheets with a colored film were formed in the same manner as in Example 11, and their characteristics were evaluated. The results are shown in Table 4.

In Examples 12 to 14 were used the liquid compositions for forming a colored film employed in Examples 2 to 4, respectively.

**Table 4-1**

| Examples | 11 | 12 | 13 | 14 |
|---|---|---|---|---|
| Film Composition before Dealkalization | | | | |
| Na₂O (%) | 11 | 7 | 14 | 15 |
| K₂O (%) | 4 | 10 | 5 | - |
| Li₂O (%) | - | - | - | 2 |
| SiO₂ (%) | 60 | 54 | 63 | 65 |
| C (%) | 25 | 29 | 18 | 18 |

| Film Composition after Dealkalization | | | | |
|---|---|---|---|---|
| Na₂O (%) | 2 | 1 | 2.5 | 1 |
| K₂O (%) | 0.5 | 1 | 0.5 | - |
| Li₂O (%) | - | - | - | 0.5 |
| SiO₂ (%) | 77.5 | 77 | 81 | 75.5 |
| C (%) | 20 | 21 | 16 | 23 |

**Table 4-2**

| Examples | 11 | 12 | 13 | 14 |
|---|---|---|---|---|
| Film Formation Method | | | | |
| First-Drying Temperature (°C) | Room Temperature | Room Temperature | Room Temperature | Room Temperature |
| First-Drying Time (min) | 5 | 5 | 3 | 10 |
| Second-Drying Temperature (°C) | 190 | 230 | 190 | 190 |
| Second-Drying Time (min) | 10 | 3 | 5 | 10 |
| Sintering Temperature (°C) | 720 | 680 | 720 | 720 |
| Sintering Time (sec) | 90 | 120 | 120 | 90 |
| Dealkalization Time (min) | 30 | 20 | 60 | 40 |

| Film Characteristics | | | | |
|---|---|---|---|---|
| Film Thickness (µm) | 10 | 12 | 8 | 9 |
| Ultraviolet and Visible-Light Transmittance (%) | <0.1 | <0.1 | <0.1 | <0.1 |
| Acid and Base Resistance | Good | Good | Good | Good |
| Abrasion Resistance | Good | Good | Good | Good |
| High-Temperature Melting Test | Good | Good | Good | Good |
| Moisture Resistance | Good | Good | Good | Good |
| Efflorescence | Good | Good | Good | Good |

### Reference Example

A glass sheet with a colored film was obtained in the same manner as in Example 11 except that the dealkalization was not carried out. With respect to this, the efflorescence resistance was determined in the same manner as in the above. As a result, efflorescence was observed at the film surface after 100 hours. It thus was confirmed that the dealkalization can improve the efflorescence resistance.

As described above, the present invention can provide glass sheets with a colored film that can be recycled as a cullet raw material. The glass substrates with a colored film function as light-shielding films that reduce the visible light transmittance and ultraviolet transmittance to 0.1% or lower with respect to the entire wavelength region concerned.

## Claims

1. A glass substrate with a colored film comprising:
a glass substrate; and
a colored film for coating at least a portion of a surface of the glass substrate,
wherein the colored film comprises an alkali metal oxide, a silicon oxide, and fine particles that include carbon as their main component.

2. The glass substrate with a colored film according to claim 1, wherein the colored film comprises, in terms of mass%:
8% to 23% of alkali metal oxide;
40% to 75% of silicon oxide; and
3% to 45% of fine particles.

3. The glass substrate with a colored film according to claim 2, wherein the colored film comprises, in terms of mass%:
10% to 23% of alkali metal oxide;
49% to 73% of silicon oxide; and
16% to 40% of fine particles.

4. The glass substrate with a colored film according to claim 1, wherein the alkali metal oxide comprises at least two alkali metal oxides.

5. The glass substrate with a colored film according to claim 4, wherein the at least two alkali metal oxides comprise sodium and at least one selected from the group consisting of potassium and lithium.

6. The glass substrate with a colored film according to claim 5, wherein the colored film comprises, in terms of mass%:
1% to 18% of Na₂O;
0% to 18% of K₂O;
0% to 10% of Li₂O;
0.1% to 19% of K₂O + Li₂O;
40% to 70% of SiO₂; and
15% to 40% of fine particles.

7. The glass substrate with a colored film according to claim 6, wherein the colored film comprises, in terms of mass%:
5% to 15% of Na₂O;
0% to 11% of K₂O;
0% to 5% of Li₂O;
1% to 12% of K₂O + Li₂O;
50% to 70% of SiO₂; and
15% to 35% of fine particles.

8. The glass substrate with a colored film according to claim 1, wherein the colored film is substantially free from transition metal that serves as a colorant.

9. The glass substrate with a colored film according to claim 1, wherein the colored film is substantially free from Ti, Zn, Zr, P, La, Co, Cr, Cu, Ni, Mn, Cd, Sb, and Pb.

10. The glass substrate with a colored film according to claim 1, wherein the colored film has a thickness of 1 µm to 20 µm.

11. The glass substrate with a colored film according to claim 1, wherein the fine particles that include carbon as their main component are carbon black fine particles.

12. The glass substrate with a colored film according to claim 1, wherein the colored film is an amorphous film in which the fine particles that include carbon as their main component are dispersed.

13. The glass substrate with a colored film according to claim 1, wherein the colored film comprises, in terms of mass%:
0.1% to 5% of alkali metal oxide;
55 % to 90% of silicon oxide; and
10% to 45% of fine particles.

14. A laminated glass, comprising:
a glass substrate with a colored film according to claim 1, referred to as a first glass substrate;
a second glass substrate that is different from the first glass substrate; and
a thermoplastic resin film,
wherein the first glass substrate and the second glass substrate are joined together with the thermoplastic resin film interposed therebetween.

15. A fine-particle-containing solution for forming a colored film, comprising:
an alkali metal silicate; and
fine particles that include carbon as their main component.

16. The fine-particle-containing solution according to claim 15, further comprising a silicon oxide.

17. The fine-particle-containing solution according to claim 15, wherein the alkali metal silicate comprises at least two alkali metal silicates.

18. The fine-particle-containing solution according to claim 15, wherein the at least two alkali metal silicates comprise sodium and at least one selected from the group consisting of potassium and lithium.

19. The fine-particle-containing solution according to claim 15, wherein when the alkali metal silicate is expressed in terms of an alkali metal oxide and a silicon oxide, a solid content of the fine-particle-containing solution comprises, in terms of mass%:
8% to 23% of alkali metal oxide;
40% to 75% of silicon oxide; and
3% to 45% of fine particles.

20. The fine-particle-containing solution according to claim 19, wherein when the alkali metal silicate is expressed in terms of an alkali metal oxide and a silicon oxide, the solid content of the fine-particle-containing solution comprises, in terms of mass%:
10% to 23% of alkali metal oxide;
49% to 73% of silicon oxide; and
16% to 40% of fine particles.

21. The fine-particle-containing solution according to claim 15, wherein when the alkali metal silicate is expressed in terms of R₂O (where R denotes an alkali metal element) and SiO₂, a solid content of the fine-particle-containing solution comprises, in terms of mass%:
1% to 18% of Na₂O;
0% to 18% of K₂O;
0% to 10% of Li₂O;
0.1% to 19% of K₂O + Li₂O;
40% to 70% of SiO₂; and
15% to 40% of fine particles.

22. The fine-particle-containing solution according to claim 15, wherein the fine particles that include carbon as their main component are carbon black fine particles.

23. The fine-particle-containing solution according to claim 15, wherein the fine-particle-containing solution is substantially free from organic solvents.

24. The fine-particle-containing solution according to claim 15, wherein the alkali metal silicate is water glass.

25. A method for manufacturing a glass substrate with a colored film, comprising:
applying a fine-particle-containing solution according to claim 15 to at least a portion of a surface of a glass substrate; and
forming a colored film from the fine-particle-containing solution by heating the glass substrate to which the fine-particle-containing solution has been applied.

26. The method according to claim 25, wherein while being heated to 500°C to 730°C in the heating of the glass substrate, the glass substrate is subjected to at least one selected from a tempering process and a bending process.

27. The method according to claim 25, further comprising reducing an alkali metal oxide contained in the colored film by bringing at least a polar solvent into contact with the colored film.

28. The method according to claim 27, wherein the polar solvent comprises at least one selected from the group consisting of water and alcohol with a carbon number of three or smaller.

29. The method according to claim 28, wherein the polar solvent is water, and the water comprises an acid.

30. The method according to claim 29, wherein the acid is at least one selected from the group consisting of hydrochloric acid, sulfuric acid, nitric acid, hydrofluoric acid, and phosphoric acid.

31. The method according to claim 29, further comprising, after bringing at least the polar solvent into contact with the colored film, reducing the acid contained in the colored film by bringing at least a polar solvent into contact with the colored film.

32. The method according to claim 25, wherein the colored film is formed as an amorphous film having an effective oxygen-shielding function by preparing the fine-particle-containing solution so that the colored film comprises at least 8 mass% of alkali metal oxide, and the alkali metal oxide contained in the colored film is reduced to 5 mass% or less by bringing the polar solvent into contact with the colored film.
